# EUROPEAN PATENT APPLICATION

(11) **EP 4 794 027 A1**
(43) Date of publication of application: **19.08.2026**
(21) Application number: 24837276.5
(22) Date of filing: 31.12.2024
(51) Int. Cl.: H01M 4/58, H01M 4/36, H01M 4/583, H01M 4/136, H01M 4/133, H01M 10/054, C01B 25/455, C01B 32/05

(54) **POSITIVE ELECTRODE MATERIAL AND PREPARATION METHOD THEREFOR, POSITIVE ELECTRODE SHEET, AND SECONDARY BATTERY**

(30) Priority: 25.12.2024 CN 202411930464
(71) Applicant: Hubei Wanrun New Energy Technology Co., Ltd., Shiyan, Hubei 442500 (CN)
(72) Inventor: PENG, Tangping, Shiyan, Hubei 442500 (CN); LV, Fei, Shiyan, Hubei 442500 (CN); SHI, Zhixiang, Shiyan, Hubei 442500 (CN)
(74) Representative: Manitz Finsterwald Patent- und Rechtsanwaltspartnerschaft mbB
(86) International application number: PCT/CN2024/144234
(87) International publication number: WO 2026/137505

(57) **Abstract**

The present application provides a cathode material, a manufacturing method thereof, a cathode plate, a secondary battery, and an electric device, which belongs to the technical field of battery cathode materials. The cathode material includes a carbon layer and a plurality of sodium vanadium fluorophosphate particles distributed in the carbon layer. The sodium vanadium fluorophosphate particles are coated by the carbon layer. The carbon layer has a porous network structure and a thickness of 3 nm to 6 nm. A porosity of the cathode material is 10% to 35%. The manufacturing method adopts a microwave-assisted hydrothermal treatment and a sol-gel technology to obtain a gel slurry, which is dried and then calcined to obtain the above cathode material. The cathode material of the present application improves the wettability in an electrolyte and the electron and sodium ion transport efficiency, which improves the charging and discharging efficiencies and the electrochemical performance of the secondary battery.

## Description

### TECHNICAL FIELD

The present application relates to the technical field of cathode materials for batteries, particularly to a cathode material, a manufacturing method thereof, a cathode plate, and a secondary battery.

### BACKGROUND

As a potential alternative to lithium-ion batteries, sodium-ion batteries have attracted widespread attention in recent years due to their advantages such as abundant resources, low cost, and environmental friendliness. However, in practical applications, the larger volume and mass of sodium ions compared to lithium ions make their intercalation into and de-intercalation from electrode materials more challenging, thereby impacting battery performance such as energy density, cycling stability, and rate performance.

In sodium-ion batteries, the cathode materials, as a critical component of the electrochemical reaction, significantly influence the overall performance of the batteries. High-performance cathode materials not only provide higher energy density but also maintain good structural integrity and cycling stability during the charge-discharge processes.

Sodium vanadium fluorophosphate (Na₃V₂(PO₄)₂F₃, NVPF), which is an anionic compound, is commonly used as the cathode materials for sodium-ion batteries. The open framework structure of NVPF provides a three-dimensional ion diffusion channel, which facilitates the rapid de-intercalation and diffusion of sodium ions, resulting in a high ion diffusion rate and voltage platform as well as a good cycling stability. However, NVPF has some drawbacks, primarily its low electronic conductivity and slow ion diffusion speed, which lead to a low actual specific capacity and unsatisfactory rate performance in secondary batteries, thereby limiting its further application and development.

In order to further enhance the electronic conductivity and the sodium ion transport efficiency of the NVPF cathode material, and to improve the actual efficiency and cycling life of the battery, the technical solutions of the present application has been specifically proposed.

### SUMMARY

In view of the technical problem existing in the background, the present application provides a cathode material, a manufacturing method therefor, a cathode plate, a secondary battery, and an electric device in order to save the production cost, optimize the manufacturing process and further improve the actual efficiency and the cycling life of the secondary battery.

In a first aspect, a cathode material is provided according to embodiments of the present application. The cathode material includes a carbon layer and a plurality of sodium vanadium fluorophosphate particles distributed in the carbon layer. The sodium vanadium fluorophosphate particles are coated by the carbon layer.

The carbon layer has a porous network structure and a thickness of 3 nm to 6 nm.

The cathode material has a porosity of 10% to 35%.

In the technical solution of the embodiments of the present application, the carbon layer of the cathode material exhibits a porous network structure that uniformly coats the sodium vanadium fluorophosphate particles, and this porous network carbon layer has suitable thickness and porosity, thereby providing a good thermal stability and creating a more efficient electron transport channel that improves the electronic conductivity of the material, and facilitating the electrolyte penetration and the rapid sodium ion transport. As a result, the electrochemical performances of the secondary battery such as the charging efficiency and discharging efficiency is enhanced while improving the thermal stability of the secondary battery and prolonging the service life of the secondary battery.

In some embodiments, the cathode material has at least one of the following characteristics:
(1) a pore size of 2 nm to 8 nm;
(2) a specific surface area of 10 m²/g to 50 m²/g; and
(3) a powder resistivity of less than or equal to 80,000 Ω·cm.

In those embodiments, the pore size of the cathode material (i.e., the pore size of the porous network structure of the carbon layer of the cathode material) and the specific surface area of the cathode material are suitable to improve the conductivity of the cathode material and ensure good electrolyte infiltration without compromising the compaction density and the structural stability of the cathode material. In addition, the powder resistivity of the cathode material falls within a suitable range, which makes the electron transfer speed of the cathode material within a suitable range, thereby achieving a good electronic conductivity of the cathode material and resulting in a high rate performance and good stability and safety of the second battery.

In a second aspect, a manufacturing method for a cathode material is provided according to embodiments of the present application. The method includes the following steps:
mixing a reducing carbohydrate with an alkaline solution to obtain a first dispersion liquid;
mixing the first dispersion liquid with a cationic modifier and obtaining a binder through a first reaction treatment;
mixing the binder, a phosphorus source, a sodium source, a fluorine source, a vanadium source, and a complexing agent to obtain a precursor solution;
subjecting the precursor solution to a microwave reaction to obtain a gel slurry; and
subjecting the gel slurry to a drying treatment followed by a calcining treatment to obtain the cathode material.

In the technical solutions of the embodiments of the present application, the obtained cationic-modified binder, the phosphorus source, the sodium source, the vanadium source, and the complexing agent are mixed and then subjected to the microwave treatment to form a tight composite structure. The tight composite structure is subjected to the calcining treatment to obtain the cathode material having the suitable porous network carbon layer. In the cathode material, the porous carbon structure is compounded with NVPF in an in-situ co-doping manner, and the porous network carbon layer uniformly covers the sodium vanadium fluorophosphate particles to form a conductive network and a tight binding with the sodium vanadium fluorophosphate particles, which not only ensures continuity in ion transport and improves the electronic conductivity of the cathode material, but also effectively mitigates the volume change of the cathode material during the charge-discharge process, enhancing the structural stability of the cathode material. Additionally, the porous network carbon layer of the cathode material also facilitates the electrolyte penetration and the rapid sodium ion transport, further improving the charging speed and discharging speed as well as the electrochemical performance of the corresponding secondary battery.

In some embodiments, the step of mixing the reducing carbohydrate with the alkaline solution to obtain the first dispersion liquid includes:
mixing the reducing carbohydrate with the alkaline solution at a first mixing temperature for a first mixing time to obtain the first dispersion liquid;
wherein the first mixing temperature is 40°C to 80°C, and the first mixing time is 0.5h to 3h; and/or,
wherein a concentration of hydroxide ions in the alkaline solution is 0.1 mol/L to 0.5 mol/L.

In those embodiments, the reducing carbohydrate is activated in the alkaline solution, the reaction efficiency is improved, and the ionization degree of the hydroxyl group in the reducing carbohydrate is suitable to fully react with the cationic modifier, which is beneficial to obtaining the binder with an appropriate degree of the cationic modification.

In some embodiments, the step of mixing the first dispersion liquid with the cationic modifier and obtaining the binder through the first reaction treatment includes:
subjecting the first dispersion liquid mixed with the cationic modifier to a first reaction temperature for a first reaction time to obtain a first reaction liquid; and
subjecting the first reaction liquid to a neutralizing treatment followed by a purifying treatment to obtain the binder;
wherein the first reaction temperature is 30°C to 60°C, and the first reaction time is 6h to 10h; and/or,
wherein an amount-of-substance ratio of the cationic modifier to a glucose unit in the first dispersion liquid is (1 to 4): 1.

In those embodiments, a suitable amount of the cationic modifier is mixed with the first dispersion liquid and then subjected to a reaction at suitable temperature for a suitable time, which is beneficial to the sufficient reaction of the glucose unit in the first dispersion liquid and the cationic modifier at a high rate and prevents the side reaction caused by an excessively high temperature, thereby being beneficial to obtaining the binder with a uniform performance. The cationic-modified binder improves the dispersibility and the reactivity of the reducing carbohydrate and provides a good interfacial compatibility for the subsequent compounding process, facilitating the formation of the uniform cathode material.

In some embodiments, the step of subjecting the first reaction liquid to the neutralizing treatment comprises:
adding a pH adjuster to the first reaction liquid until achieving a pH value of 6 to 7 to obtain a pretreatment liquid; and
stirring the pretreatment liquid at the pH value of 6 to 7 and a temperature of 50°C to 90°C for 6h to 10h; and/or,
the step of subjecting the first reaction liquid to the purifying treatment after the neutralizing treatment comprises:
subjecting the neutralized first reaction liquid to a dialyzing treatment.

In those embodiments, an excess alkali in the first reaction liquid is neutralized to prevent an excessive degradation or an excessive structural change of the reducing carbohydrate, thereby ensuring that the modification degree of the reducing carbohydrate meets an expectation. After further purification, an impurity except the binder is removed to improve the purity of the binder.

In some embodiments, the step of subjecting the precursor solution to the microwave reaction to obtain the gel slurry includes:
subjecting the precursor solution to a first microwave power and a second reaction temperature for a second reaction time to obtain the gel slurry;
wherein the first microwave power is 200W to 500W, the second reaction temperature is 120°C to 160°C, and the second reaction time is 0.5h to 2h.

In those embodiments, the precursor solution is subjected to the microwave hydrothermal treatment such that the porous network is initially formed and the sodium vanadium fluorophosphate precursor is uniformly distributed in the porous network, which is beneficial to the subsequent manufacturing of the cathode material with the specific structure.

In some embodiments, the step of subjecting the gel slurry to the drying treatment followed by the calcining treatment to obtain the cathode material includes:
subjecting the gel slurry to a first drying temperature for a first drying time to obtain a dried gel powder; and
subjecting the dried gel powder to the calcining treatment to obtain the cathode material;
wherein the first drying temperature is 100°C to 120°C, and the first drying time is 6h to 12h; and/or,
the step of subjecting the dried gel powder to the calcining treatment to obtain the cathode material includes:
in a first protective gas, subjecting the dried gel powder to a first calcining temperature for a first temperature-holding time to obtained a first calcined material;
in a second protective gas, subjecting the first calcined material to a second calcining temperature for a second temperature-holding time to obtain a second calcined material; and
subjecting the second calcined material to a grinding treatment and a sieving treatment to obtain the cathode material;
wherein the first protective gas or the second protective gas is a protective gas, the first calcining temperature is 350°C to 550°C, the first temperature-holding temperature time is 0.5h to 2h, the second calcining temperature is 700°C to 800°C, and the second temperature-holding temperature time is 1h to 3h; and
wherein the protective gas comprises argon, nitrogen, or a combination thereof.

In those embodiments, the gel slurry is dried and calcined to obtain the cathode material having the porous network carbon layer and the sodium vanadium fluorophosphate particles uniformly distributed in the carbon layer. The porous network carbon layer structure uniformly coats the sodium vanadium fluorophosphate particles and has a suitable porosity, and the carbon layer also has a suitable thickness, which provides a more efficient electron transport channel that improves the electronic conductivity of the cathode material, and which facilitates the electrolyte penetration and the rapid sodium ion transport, further improving the charge efficiency, discharge efficiency and the electrochemical performance of the corresponding secondary battery.

In some embodiments, the manufacturing method satisfies at least one of the following conditions:
(1) an amount-of-substance ratio of phosphorus in the phosphorus source, sodium in the sodium source, fluorine in the fluorine source, and vanadium in the vanadium source is 2:3:3:2;
(2) a mass ratio of the binder, the vanadium source, and the complexing agent is 1:1:(1 to 5);
(3) the cationic modifier comprises 2,3-epoxypropyl trimethyl ammonium chloride, 3-chloro-2-hydroxypropyl trimethyl ammonium chloride, 2-diethylaminoethylammonium chloride, or any combinations thereof;
(4) the phosphorus source comprises phytic acid;
(5) the sodium source comprises sodium hydroxide, sodium fluoride, sodium carbonate, sodium bicarbonate, or any combinations thereof;
(6) the fluorine source comprises ammonium fluoride, polytetrafluoroethylene, sodium fluoride, or any combinations thereof;
(7) the vanadium source comprises ammonium vanadate, ammonium metavanadate, or a combination thereof; and
(8) the complexing agent comprises citric acid, oxalic acid, tannic acid, or any combinations thereof.

In those embodiments, by controlling the molar ratio of the phosphorus source, the sodium source, the fluorine source, and the vanadium source to be 2:3:3:2, it is beneficial to the sufficient reaction of the phosphorus source, the sodium source, the fluorine source, and the vanadium source, thereby improving the purity of the cathode material. The mass ratio of the binder, the vanadium source, and the complexing agent is 1:1:(1 to 5), which helps to improve the electrochemical performance and structural stability of the cathode material. The cationic modifier containing a positively charged nitrogen atom and the hydroxyl group of the reducing carbohydrate are subjected to the etherification reaction to modify the reducing carbohydrate, which is beneficial to obtaining the cathode material with the improved uniformity, thereby improving the electrochemical performance of the cathode material. The use of phytic acid as a phosphorus source is beneficial to reducing costs and reducing the impact on the environment. The above sodium source, fluorine source, and vanadium source are widely available and relatively cheap, which helps to reduce the process cost. The use of the naturally occurring complexing agent is beneficial to reducing the impact of the manufacturing process on the environment while improving the stability and the electrochemical performance of the cathode material.

In a third aspect, a cathode plate is provided according to embodiments of the present application. The cathode plate includes the cathode material as described above or the cathode material manufactured by any manufacturing method as described above.

In this embodiment, the cathode plate has the advantages of high electronic conductivity, high sodium ion transport efficiency, and high stability due to the inclusion of the cathode material as described above.

In a fourth aspect, a secondary battery is provided according to embodiments of the present application. The secondary battery includes the cathode plate as described above.

In this embodiment, the secondary battery has the advantages of high charging efficiency, high discharging efficiency, high energy density, and a long cycling life due to the inclusion of the cathode plate as described above.

The above description is only an overview of the technical solutions of the present application. In order to better understand the technical means of the present application, so that it can be implemented in accordance with the contents of the description, and in order to make the above and other purposes, characteristics, and advantages of the present application more clearly understood, the specific embodiments of the present application are described below.

### BRIEF DESCRIPTION OF THE DRAWINGS

In order to illustrate the embodiments of the present application more clearly, the drawings used in the present application will be described briefly below. Apparently, the following described drawings are merely for the embodiments of the present application, and other drawings can be derived from the described drawings by those of ordinary skill in the art without any creative effort.
FIG. 1 is a flow chart of a manufacturing process of a cathode material according to an embodiment of the present application.
FIGs. 2a to 2f are diagrams showing energy dispersive X-ray spectroscopy (EDS) results of different elements of the cathode material according to an embodiment of the present application.
FIG. 3 shows the scanning electron microscope images of the cathode material in Example 1, Example 2 and Example 3 of the present application, wherein (a), (b) and (c) in FIG. 3 are scanning electron microscope images of the cathode material in Example 1, Example 2 and Example 3, respectively.
FIG. 4 is a scanning electron microscope image of the cathode material in Comparative Example 1 of the present application.
FIG. 5 is a scanning electron microscope image of the cathode material in Comparative Example 1 of the present application.

### DETAILED DESCRIPTION

Embodiments of technical solutions of the present application will now be described in detail with reference to the accompanying drawings. The following embodiments are only for illustrating the technical solutions of the present application more clearly, therefore only used as examples, and they cannot be construed as limiting the protection scope of the present application.

Unless otherwise defined, all technical and scientific terms used herein have the same meaning as commonly understood by persons skilled in the art to which the present application pertains. The terms used herein are only for the purpose of describing specific embodiments and are not intended to limit the present application. The terms "comprise" and "include" and any variations thereof in the description and claims as well as the above description of drawings of the present application are intended to cover non-exclusive inclusions.

In the description of the embodiments of the present application, the technical terms "first", "second", etc. are only used to distinguish different objects, and cannot be understood as indicating or implying relative importance or implicitly indicating the quantity, particular order, or primary and secondary relationship of the indicated technical features. In the description of the embodiments of the present application, the "plurality" means at least two, unless otherwise specifically defined.

When "embodiment" is mentioned herein, it means that a particular feature, structure, or characteristic described based on the embodiment can be included in at least one embodiment of the present application. When appeared in various places in the description, the phrase does not necessarily refer to the same embodiment, nor be a separate or alternative embodiment mutually exclusive of other embodiments. It is explicitly and implicitly understood by persons skilled in the art that the embodiments described herein can be combined with other embodiments.

In the description of the embodiments of the present application, the term "and/or" only describes the association relationship of associated objects, indicating that there can be three relationships. For example, A and/or B may indicate three conditions: A alone, both A and B, and B alone. In addition, the character "/" herein generally indicates that the relationship between the former and latter objects is an "or" relationship.

In the description of the embodiments of the present application, the term "a plurality of" refers to at least two (including two). Similarly, "a plurality of groups" refers to at least two groups (including two groups), and "a plurality of pieces" refers to at least two pieces (including two pieces).

In the description of the embodiments of the present application, the solvent in the "solution" or "reaction liquid" is water, unless otherwise specified.

In the description of the embodiments of the present application, water is distilled water, deionized water, pure water, ultrapure water, or any combinations thereof.

Sodium vanadium fluorophosphate (Na₃V₂(PO₄)₂ F₃, NVPF), an anionic compound, shows potential as a material for sodium-ion batteries. However, the low electronic conductivity and slow ion diffusion rate of NVPF result in a secondary battery using NVPF exhibiting low actual specific capacity and unsatisfactory rate performance, which limits further application and development of NVPF.

To address the technical problem of low actual specific capacity and unsatisfactory rate performance of the secondary batteries using the NVPF-type cathode materials, the present application provides a cathode material, a manufacturing method thereof, a cathode plate, a secondary battery, and an electric device. The cathode material of the present application is characterized by including a carbon layer and sodium vanadium fluorophosphate particles distributed in the carbon layer. The sodium vanadium fluorophosphate particles are coated by the carbon layer. The carbon layer exhibits a porous network structure and has a thickness of 3 nm to 6 nm. The cathode material has a porosity of 10% to 35%. The cathode material of the present application effectively improves the electron transport efficiency, increases the ion diffusion rate, and improves the wettability in the electrolyte, thereby improving the actual capacity of the cathode material, the cathode plate, the secondary battery, or the electric device as well as the electrochemical performance such as the cycling performance and the rate performance.

In a first aspect, a cathode material is provided according to embodiments of the present application, which includes a carbon layer and sodium vanadium fluorophosphate particles distributed in the carbon layer. The sodium vanadium fluorophosphate particles are coated by the carbon layer.

The carbon layer exhibits a porous network structure and a thickness of 3 nm to 6 nm.

The cathode material has a porosity of 10% to 35%.

In some embodiments, the thickness of the carbon layer is 4 nm to 6 nm, which is more beneficial to improving the electronic conductivity of the cathode material and improving the thermal stability of the cathode material.

Optionally, the thickness of the carbon layer includes 3 nm, 3.2 nm, 3.5 nm, 3.6 nm, 3.8 nm, 4 nm, 4.2 nm, 4.5 nm, 4.6 nm, 4.8 nm, 5 nm, 5.1 nm, 5.2 nm, 5.5 nm, 5.6 nm, 5.8 nm, 6 nm, etc.

In some embodiments, the porosity of the cathode material is 13% to 33%, which is more beneficial to improving the electronic conductivity of the cathode material and improving the thermal stability of the cathode material.

Further, the porosity of the cathode material can be 15% to 20%, which is more beneficial to balancing the electronic conductivity and the thermal stability of the cathode material. Optionally, the porosity of the cathode material includes 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, etc.

In the technical solutions of the embodiments of the present application, the carbon layer of the cathode material exhibits a porous network structure that uniformly coats the sodium vanadium fluorophosphate particles and has a suitable porosity, and the carbon layer has a suitable thickness, which provides a more efficient electron transport channel that improves the electronic conductivity of the material, and facilitates the electrolyte penetration and the rapid sodium ion transport, thereby further improving the charging efficiency, the discharging efficiency, and the electrochemical performance of the corresponding secondary battery.

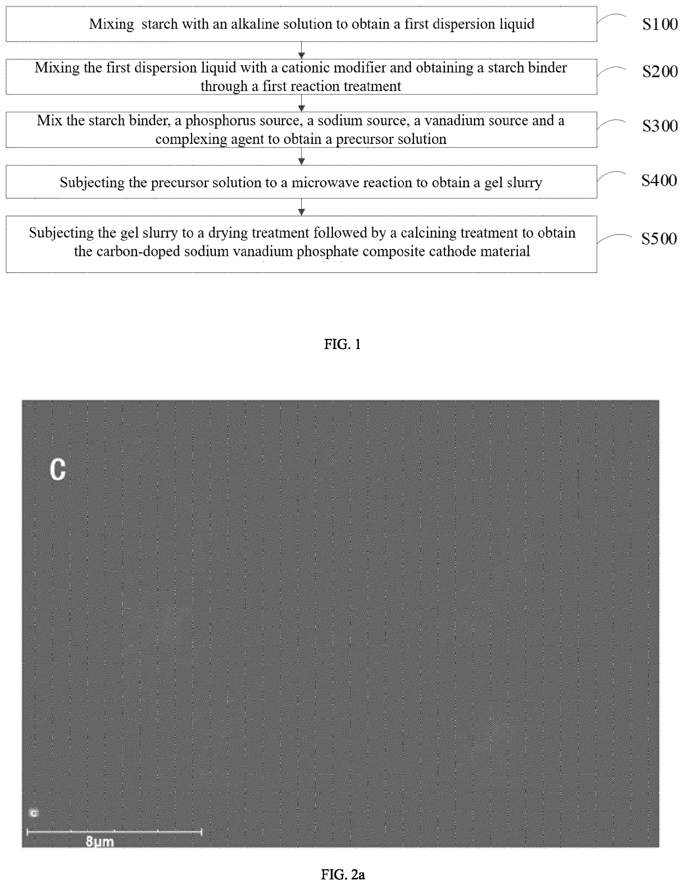

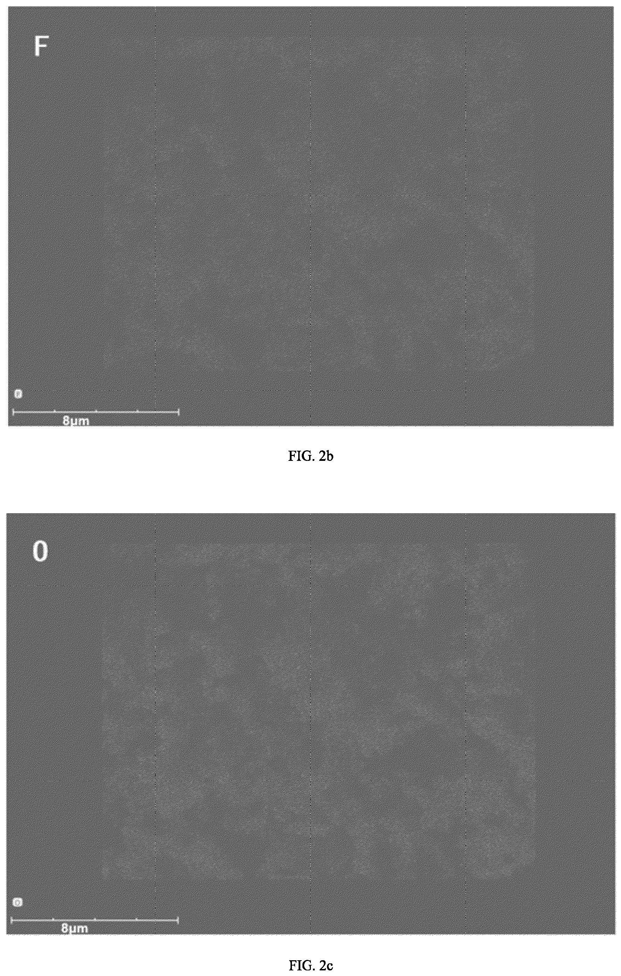

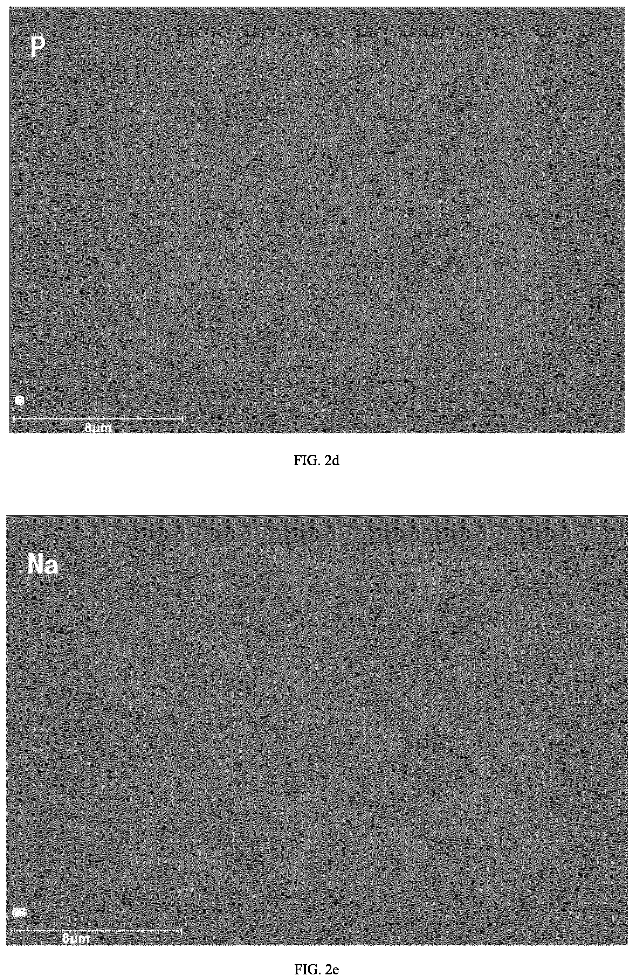

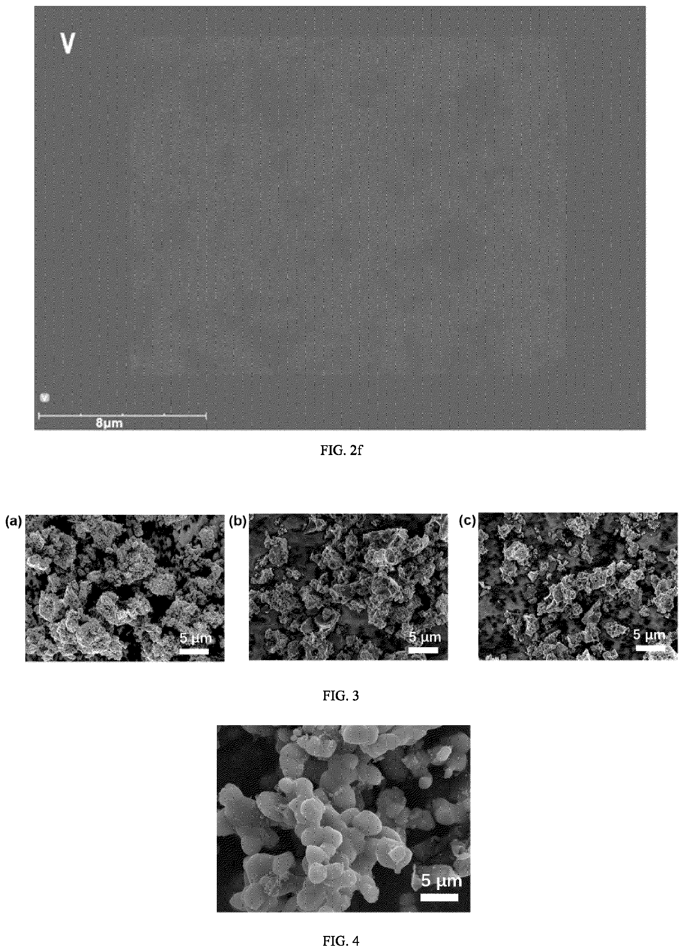

Referring to FIGs. 2a to 2f and FIG. 3, in some embodiments, the carbon layer structure of the cathode material is uniformly distributed on the surface of or within the sodium vanadium fluorophosphate particles, forming an in-situ carbon-doped structure that allows the carbon layer to uniformly cover the sodium vanadium fluorophosphate particles and creates a conductive network, thereby enhancing the binding force between the sodium vanadium fluorophosphate particles and the carbon layer. Moreover, the uniformly distributed pores and the good connectivity between the pores result in a continuous and interconnected network structure, which improves the conductivity of the cathode material and provides an efficient channel for sodium ion transport, facilitating the rapid diffusion and migration of sodium ions within the cathode material, which in turn enhances the rate performance of the secondary battery and improves the structural stability of the cathode material.

In some embodiments, the cathode material has at least one of the following characteristics:
(1) a pore size of the carbon layer of 2 nm to 8 nm;
(2) a specific surface area of 10 m²/g to 50 m²/g; and
(3) a powder resistivity of less than or equal to 80,000 Ω·cm.

In some embodiments, the pore size of the carbon layer of the cathode material is 2 nm to 6 nm, which is beneficial to better maintaining the structural stability of the cathode material and providing a more efficient electron transport channel, and also beneficial to the electrolyte penetration and the rapid sodium ion transport. It should be understood that if the pore size is too large, it may lead to excessive electrolyte penetration within the carbon layer, resulting in the formation of a high-impedance interface layer that increases the internal resistance of the secondary battery. Furthermore, the pore size that is too large may compromise the continuity and uniformity of the carbon layer, disrupting the sodium ion transport channel and negatively impacting the sodium ion diffusion efficiency. Conversely, if the pore size is too small, it hinders electrolyte penetration, adversely affecting the electrolyte wettability and similarly impeding sodium ion diffusion. Optionally, the pore size of the carbon layer includes 2 nm, 2.2 nm, 2.5 nm, 2.6 nm, 2.8 nm, 3 nm, 3.1 nm, 3.2 nm, 3.5 nm, 3.6 nm, 3.8 nm, 4 nm, 4.2 nm, 4.5 nm, 4.6 nm, 4.8 nm, 5 nm, 5.2 nm, 5.5 nm, 5.6 nm, 5.8 nm, 6 nm, 6.2 nm, 6.5 nm, 6.6 nm, 6.8 nm, 7 nm, 7.2 nm, 7.5 nm, 7.6 nm, 7.8 nm, 8 nm, etc.

In some embodiments, the specific surface area of the cathode material is 13 m²/g to 45 m²/g, which is beneficial to better maintaining the structural stability of the cathode material and providing a more efficient electron transport channel, and also beneficial to the electrolyte penetration and the rapid sodium ion transport.

Further, the specific surface area of the cathode material can be 13 m²/g to 27 m²/g, which is more beneficial to maintaining the structural stability of the cathode material and improving the electronic conductivity and the sodium ion transport efficiency of the cathode material, and also more beneficial to the electrolyte penetration. Optionally, the specific surface area of the cathode material includes 10 m²/g, 11 m²/g, 12 m²/g, 13 m²/g, 14 m²/g, 15 m²/g, 16 m²/g, 17 m²/g, 18 m²/g, 19 m²/g, 20 m²/g, 21 m²/g, 22 m²/g, 23 m²/g, 24 m²/g, 25 m²/g, 26 m²/g, 27 m²/g, 28 m²/g, 29 m²/g, 30 m²/g, 31 m²/g, 32 m²/g, 33 m²/g, 34 m²/g, 35 m²/g, 36 m²/g, 37 m²/g, 38 m²/g, 39 m²/g, 40 m²/g, 41 m²/g, 42 m²/g, 43 m²/g, 44 m²/g, 45 m²/g, 46 m²/g, 47 m²/g, 48 m²/g, 49 m²/g, 50 m²/g, etc.

In some embodiments, the powder resistivity of the cathode material of the present application is less than or equal to 80,000 Ω·cm, which is beneficial to improving the electronic conductivity of the cathode material of the present application.

In some embodiments, the powder resistivity of the cathode material is 30,000 Ω·cm to 80,000 Ω·cm, which is beneficial to improving the electronic conductivity of the cathode material.

Further, the powder resistivity of the cathode material can be 30,000 Ω·cm to 50,000 Ω·cm, which is more beneficial to improving the electronic conductivity of the cathode material.

Optionally, the powder resistivity of the cathode material includes 33,000 Ω·cm, 35,000 Ω·cm, 36,000 Ω·cm, 38,000 Ω·cm, 40,000 Ω·cm, 41,000 Ω·cm, 42,000 Ω·cm, 45,000 Ω·cm, 46,000Ω·cm, 48,000 Ω·cm, 50,000 Ω·cm, 51,000 Ω·cm, 52,000 Ω·cm, 55,000 Ω·cm, 56,000 Ω·cm, 58,000 Ω·cm, 60,000 Ω·cm, 61,000 Ω·cm, 62,000 Ω·cm, 65,000 Ω·cm, 66,000 Ω·cm, 68,000 Ω·cm, 70,000 Ω·cm, 72,000 Ω·cm, 75,000 Ω·cm, 76,000 Ω·cm, 78,000 Ω·cm, 80,000 Ω·cm, etc.

In a second aspect, a manufacturing method of a cathode material is provided according to embodiments of the present application, including the following steps:
S100: mixing a reducing carbohydrate with an alkaline solution to obtain a first dispersion liquid;
S200: mixing the first dispersion liquid with a cationic modifier and obtaining a binder through a first reaction treatment;
S300: mixing the binder, a phosphorus source, a sodium source, a fluorine source, a vanadium source, and a complexing agent to obtain a precursor solution;
S400: subjecting the precursor solution to a microwave reaction treatment to obtain a gel slurry; and
S500: subjecting the gel slurry to a drying treatment followed by a calcining treatment to obtain the cathode material.

In the technical solutions of the embodiments of the present application, a reducing carbohydrate is used as a raw material to form a macromolecular binder through the cationic chemical modification. The binder is combined with a precursor, such as a phosphorus source, a sodium source, and a vanadium source, and a complexing agent and subjected to a microwave-assisted hydrothermal treatment to form a tight composite structure. The composite structure is subjected to a calcining treatment to obtain a cathode material having a suitable porous network carbon layer.

As the carbon material itself exhibits a good conductivity, and the porous structure within the carbon layer of the cathode material facilitates the electrolyte penetration and the rapid sodium ion transport, the charging efficiency, the discharging efficiency, and the thermal stability of the corresponding secondary battery are improved, and the service life of the secondary battery is prolonged.

In the cathode material, the porous carbon structure is compounded with NVPF in an in-situ co-doping manner, and the porous network carbon layer uniformly covers the sodium vanadium fluorophosphate particles to form a conductive network and a tight binding with the sodium vanadium fluorophosphate particles, which not only ensures continuity in ion transport and improves the electronic conductivity of the material, but also effectively mitigates the volume change during the charge-discharge process, enhancing the structural stability of the material. Additionally, the porous network carbon layer of the cathode material also facilitates the electrolyte penetration and the rapid sodium ion transport, further improving the charging rate, the discharging rate, and the electrochemical performance of the secondary battery.

In step S100, the reducing carbohydrate and the alkaline solution are mixed to obtain the first dispersion liquid. This step is beneficial to activating the hydroxyl group in the reducing carbohydrate.

The reducing carbohydrate can be selected from reducing carbohydrates having glucose units, such as starch, cellulose, maltose, and sucrose.

When the reducing carbohydrate is mixed with the alkaline solution, the hydroxyl group in the reducing carbohydrate is ionized, so that after the subsequent mixing with the cationic modifier, the cationic modifier can be linked to the reducing carbohydrate through an etherification reaction to obtain the binder. Exemplarily, after the reducing carbohydrate is mixed with the alkaline solution, the particle of the reducing carbohydrate absorbs water at a suitable temperature for a suitable time period and eventually rupture to release the molecular chain of the reducing carbohydrate, so that the hydroxyl group in the reducing carbohydrate molecule is activated and can subsequently reacted with the cationic modifier to obtain the binder.

The concentration of the alkaline solution affects the activation rate of the reducing carbohydrate and the property of the activated reducing carbohydrate. A suitable alkaline concentration is beneficial to facilitating the gelatinization of the particle of the reducing carbohydrate, making the hydroxyl group in the reducing carbohydrate more active and facilitating its reaction with the etherifying agent.

It should be understood that if the alkali concentration is too high, a gel layer may form on the surface of the particle of the reducing carbohydrate, hindering the penetration of the cationic modifier, thereby reducing the reaction efficiency and hindering the cationic modification. If the alkali concentration is too low, the hydroxyl group in the reducing carbohydrate cannot be fully ionized, limiting its reaction opportunities with the cationic modifier and resulting in incomplete reaction. Additionally, insufficient activation of the reducing carbohydrate further decreases reaction efficiency.

In some embodiments, the concentration the hydroxide ions in the alkaline solution is 0.1 mol/L to 0.5 mol/L, which is beneficial to obtaining a better activation effect, an increased reaction efficiency, and a suitable degree of ionization of the hydroxyl group in the reducing saccharides, thereby obtaining full reaction with the cationic modifier to obtain a binder with a suitable degree of cationic modification.

Optionally, the concentration of the hydroxide ions in the alkaline solution includes 0.1 mol/L, 0.2 mol/L, 0.3 mol/L, 0.4 mol/L, 0.5 mol/L, etc.

In some embodiments, the step of mixing the reducing carbohydrate with the alkaline solution to obtain the first dispersion liquid includes:
mixing the reducing carbohydrate with the alkaline solution at a first mixing temperature for a first mixing time to obtain the first dispersion liquid.

The first mixing temperature is 40°C to 80°C. The first mixing time is 0.5h to 3h.

Optionally, the first mixing temperature includes 40°C, 45°C, 50°C, 55°C, 60°C, 65°C, 70°C, 75°C, 80°C, etc. The first mixing time includes 0.5h, 1h, 1.5h, 2h, 2.5h, 3h, etc.

In step S200, the first dispersion liquid is mixed with the cationic modifier and subjected to the first reaction treatment to obtain the binder. This step allows the cationic modifier to be linked to the reducing carbohydrate via an ether bond, thereby obtaining the cationic-modified reducing carbohydrate as the binder.

The cationic modifier usually contains at least one positively charged nitrogen atom and can carry out an etherification reaction with the hydroxyl group of the reducing carbohydrate so that the cationic modifier is linked to the reducing carbohydrate molecule to modify the reducing carbohydrate molecule. The cationic-modified reducing carbohydrate (i.e., the binder) is beneficial to improving the conductivity of the cathode material due to the presence of the modified group. The binder also has an improved dispersibility and reactivity, which is beneficial to providing a good interface compatibility during the subsequent compounding process and facilitates the formation of the uniform cathode material.

Optionally, the cationic modifier includes 2,3-epoxypropyl trimethyl ammonium chloride, 3-chloro-2-hydroxypropyl trimethyl ammonium chloride, 2-diethylaminoethyl ammonium chloride, or any combinations thereof.

In some embodiments, an amount-of-substance ratio of the cationic modifier to the glucose unit in the first dispersion liquid is (1 to 4):1. As used herein, the glucose unit refers to the basic structural unit constituting the polysaccharide chain, represented by the molecular formula C₆H₁₂O₆. For example, sucrose contains two glucose units.

Optionally, the amount-of-substance ratio of the cationic modifier to the glucose unit in the first dispersion liquid includes 1:1, 1.5:1, 2:1, 2.5:1, 3:1, 3.5:1, 4:1, etc.

In some embodiments, the step of mixing the first dispersion liquid with the cationic modifier and obtaining the binder through the first reaction treatment includes:
subjecting the first dispersion liquid mixed with the cationic modifier to a first reaction temperature for a first reaction time to obtained a first reaction liquid; and
subjecting the first reaction liquid to a neutralizing treatment followed by a purifying treatment to obtain the binder.

The first reaction temperature is 30°C to 60°C. The first reaction time is 6h to 10h.

Optionally, the first reaction temperature includes 30 °C, 35 °C, 40 °C, 45 °C, 50 °C, 55 °C, 60 °C, etc. The first reaction time includes 6h, 6.5h, 7h, 7.5h, 8h, 8.5h, 9h, 9.5h, 10h, etc.

In some embodiments, the step of subjecting the first reaction liquid to the neutralizing treatment includes:
adding a pH adjuster to the first reaction liquid until achieving a pH value of 6 to 7 to obtain a pretreatment liquid; and
stirring the pretreatment liquid at the pH value of 6 to 7 and at 50°C to 90°C for 6h to 10h to ensure that the neutralization reaction is complete.

In some embodiments, the pH adjuster is an acid solution to adjust the pH value of the first reaction liquid to 6 to 7. For example, the acid solution is an aqueous solution of hydrochloric acid, an aqueous solution of sulfuric acid, an aqueous solution of nitric acid, etc.

In some embodiments, the concentration of the hydrogen ions in the acid solution is 0.1mol/L to 0.5mol/L, which is beneficial to more accurately adjusting the pH value of the first reaction liquid.

Optionally, the concentration of the hydrogen ions in the acid solution includes 0.1 mol/L, 0.2 mol/L, 0.3 mol/L, 0.4 mol/L, 0.5 mol/L, etc.

Optionally, in the step of subjecting the first reaction liquid to the neutralizing treatment, the stirring temperature of the pretreatment liquid includes 50 °C, 55 °C, 60 °C, 65 °C, 70 °C, 75 °C, 80 °C, etc., and the stirring time includes 6h, 6.5h, 7h, 7.5h, 8h, 8.5h, 9h, 9.5h, 10h, etc.

Before adding the pH adjuster to the first reaction liquid, an appropriate amount of water can be added to the first reaction liquid to dilute the first reaction liquid to 2 times to 4 times its original volume, which ensures that the subsequent pH adjustment can be performed smoothly.

Further, the first reaction liquid is subjected to the purifying treatment after the neutralizing treatment, including:
subjecting the neutralized first reaction liquid to a dialyzing treatment.

Further, the step of dialyzing the neutralized first reaction liquid includes:
placing the neutralized first reaction liquid into a dialyzing bag and then dialyzing and purifying the neutralized first reaction liquid with water.

Optionally, a molecular weight cut-off of the dialyzing bag is 3 kDa to 4 kDa. For example, the molecular weight cut-off includes 3 kDa, 3.1 kDa, 3.2 kDa, 3.3 kDa, 3.4 kDa, 3.5 kDa, 3.6 kDa, 3.7 kDa, 3.8 kDa, 3.9 kDa, 4 kDa, etc.

Optionally, the dialyzing and purifying time can be 12h to 14h, for example, 12.5h, 13h, 13.5h, etc. In the above process of dialyzing and purifying, the purifying water may not be replaced, or may be replaced one or more times (e.g., two times, three times, etc.).

In step S300, the binder, the phosphorus source, the sodium source, the vanadium source, the fluorine source, and the complexing agent are mixed to obtain the precursor solution. This step provides the raw materials required to manufacture the cathode material and mixed the raw materials to form the precursor solution.

Further, the step of mixing the binder, the phosphorus source, the sodium source, the vanadium source, the fluorine source, and the complexing agent to obtain the precursor solution includes:
providing an aqueous solution of the binder; and
mixing the aqueous solution of the binder with the phosphorus source, the sodium source, the vanadium source, the fluorine source, and the complexing agent at a second mixing temperature for a second mixing time to obtain the precursor solution.

Optionally, the second mixing temperature is 24 °C to 26 °C, for example, 25 °C.

Optionally, the second mixing time is 0.5h to 3h, for example, 1h, 1.5h, 2h, 2.5h, etc.

Optionally, the aqueous solution of the binder, the phosphorus source, the sodium source, the vanadium source, the fluorine source, and the complexing agent are stirred to form the precursor solution.

Optionally, in accordance with the crystal structure, an amount-of-substance ratio of phosphorus in the phosphorus source, sodium in the sodium source, fluorine in the fluorine source, and vanadium in the vanadium source is 2:3:3:2. By precisely controlling the molar ratio of the phosphorus source, the sodium source, the fluorine source, and the vanadium source at 2:3:3:2, it is beneficial to achieving a sufficient and complete reaction of individual raw materials, thereby improving the purity of the cathode material.

Optionally, a mass ratio of the binder, the vanadium source, and the complexing agent is 1:1:(1 to 5), which facilitates the formation of the uniform cathode material and improves the electrochemical performance and the structural stability of the cathode material. For example, the mass ratio of the binder, the vanadium source, and the complexing agent are 1:1:1, 1:1:2, 1:1:3, 1:1:4, 1:1:5, etc.

Optionally, the phosphorus source is a phytic acid. The phytic acid which is a type of natural organic phosphorus source helps to reduce costs and the environmental impact. In the technical solutions of the present application, the phytic acid can be used as both the phosphorus source and a cross-linking agent. Moreover, the reducing carbohydrate as a natural macromolecule organic carbon source not only is low in cost and widely available, but also has unique structure and chemical properties. The combination of the two can improve the electrochemical performance of the cathode material while reducing the cost of the cathode material.

Optionally, the sodium source includes sodium hydroxide, sodium fluoride, sodium carbonate, sodium bicarbonate, or any combinations thereof.

Optionally, the fluorine source includes ammonium fluoride, polytetrafluoroethylene, sodium fluoride, or any combinations thereof.

Optionally, the vanadium source includes ammonium vanadate, ammonium metavanadate, or a combination thereof.

The above-mentioned sodium source, fluorine source and vanadium source are widely available and relatively cheap, which helps to reduce the process cost.

Optionally, the complexing agent includes citric acid, oxalic acid, tannic acid, or any combinations thereof.

The use of the above-mentioned naturally occurring complexing agent is beneficial to improving the stability and the electrochemical performance of the cathode material while reducing the impact of the process on the environment.

In step S400, the precursor solution is subjected to the microwave reaction treatment to obtain the gel slurry. This step uses the sol-gel technology in combination with the microwave hydrothermal technology, which allows the porous network to be initially formed and allows the sodium vanadium fluorophosphate precursor to be uniformly distributed in the network, providing a material basis for the subsequent manufacturing of the cathode material with the specific structure. After drying and calcining the gel slurry, the cathode material that has the porous network carbon layer and the sodium vanadium fluorophosphate particles uniformly distributed in the carbon layer is obtained, wherein the carbon layer and the cathode material have the characteristics of any of the above technical solutions, thereby achieving improvement in the electrical performance and the like.

In some embodiments, the step of subjecting the precursor solution to the microwave reaction treatment to obtain the gel slurry includes:
subjecting the precursor solution to a first microwave power and a second reaction temperature for a second reaction time to obtain the gel slurry.

The first microwave power is 200W to 500W. The second reaction temperature is 120 °C to 160 °C. The second reaction time is 0.5h to 2h.

Optionally, the first microwave power includes 200W, 250W, 300W, 350W, 400W, 450W, 500W, etc. The second reaction temperature includes 120 °C, 125 °C, 130 °C, 135 °C, 140 °C, 145 °C, 150 °C, 155 °C, 160 °C, etc. The second reaction time includes 0.5h, 1h, 1.5h, 2h, etc.

In step S500, the gel slurry is subjected to the drying treatment followed by the calcining treatment to obtain the cathode material. The cathode material can be the cathode material of any of the above technical solutions.

In some embodiments, the step of subjecting the gel slurry to the drying treatment followed by the calcining treatment to obtain the cathode material includes:
subjecting the gel slurry to a first drying temperature for a first drying time to obtain a dried gel powder; and
subjecting the dried gel powder to the calcining treatment to obtain the cathode material.

The first drying temperature is 100 °C to 120 °C. The first drying time is 6h to 12h.

Optionally, the first drying temperature includes 100°C, 102°C, 105°C, 108°C, 110°C, 112°C, 115°C, 118°C, 120°C, etc. The first drying time includes 6h, 6.5h, 7h, 7.5h, 8h, 8.5h, 9h, 9.5h, 10h, 10.5h, 11h, 11.5h, 12h, etc.

In some embodiments, the step of subjecting the dried gel powder to the calcining treatment to obtain the cathode material includes:
in a first protective gas, subjecting the dried gel powder to a first calcining temperature for a first temperature-holding time to obtain a first calcinated material;
in a second protective gas, subjecting the first calcinated material to a second calcining temperature for a second temperature-holding time to obtain a second calcinated material; and
subjecting the second calcinated material to a grinding treatment and a sieving treatment to obtain the cathode material.

The first protective gas and the second protective gas are each independently argon, nitrogen, and a combination thereof. The first calcining temperature is 350°C to 550°C. The first temperature-holding temperature time is 0.5h to 2h. The second calcining temperature is 700°C to 800°C. The second temperature-holding temperature time is 1h to 3h.

Optionally, a heating rate for heating to the first calcining temperature is 3°C/min to 7°C/min, for example, 4°C/min, 5°C/min, 6°C/min, etc. The heating rate for heating to the second calcining temperature is, for example, 4°C/min, 5°C/min, 6°C/min, etc.

Optionally, a flow rate of the first protective gas is 50 mL/min to 120 mL/min, for example, 55 mL/min, 60 mL/min, 70 mL/min, 80 mL/min, 90 mL/min, 100 mL/min, 110 mL/min, etc. A flow rate of the second protective gas is 50 mL/min to 120 mL/min, for example, 55 mL/min, 60 mL/min, 70 mL/min, 80 mL/min, 90 mL/min, 100 mL/min, 110 mL/min, etc.

Optionally, the second calcined material is cooled to 40°C to 60°C (e.g., 45°C, 50°C, 55°C, etc.) and then subjected to the grinding treatment and the sieving treatment to obtain the cathode material.

In those embodiments, the first calcination and the second calcination are performed in steps, facilitating the segmented decomposition of the carbon source mixed with the precursor and preventing the large-scale decomposition of the carbon source within a specific temperature range which can generate excessive gas and lead to a rapid expansion of the material volume due to an escape of a large amount of gas. Such expansion can create large pores in the porous network carbon layer and reduces the electrochemical performance. Additionally, the segmented calcination allows for a slower gas escape, effectively preventing issues such as excessively low compaction density, excessively high specific surface area, and deterioration of electrochemical performance, which are related to the forming and then contracting rapidly of numerous void structures in the cathode material.

Optionally, the first calcining temperature includes 350°C, 400°C, 450°C, 500°C, 550°C, etc. The first temperature-holding temperature includes 0.5h, 1h, 1.5h, 2h, etc. The second calcining temperature includes 700°C, 720°C, 750°C, 780°C, 800°C, etc. The second temperature-holding temperature includes 1h, 1.5h, 2h, 2.5h, 3h, etc.

In those embodiments, the grinding treatment and the sieving treatment are used to obtain the cathode material having a suitable particle size. The grinding treatment can be performed by a suitable grinding method known in the art, for example, by ball milling, and the ball milling instrument can be a planetary ball mill and the like. The sieving treatment can be performed by a suitable sieving method known in the art, such as sieving using a sieve.

The manufacturing method of the present application can be used to manufacture the cathode material in the first aspect. The manufactured cathode material can have the following characteristics: the cathode material includes a carbon layer and a plurality of sodium vanadium fluorophosphate particles distributed in the carbon layer, the sodium vanadium fluorophosphate particles are coated by the carbon layer, the carbon layer has a porous network structure, a thickness of the carbon layer is 3nm to 6nm, and a porosity of the cathode material is 10% to 35%.

In the technical solutions of those embodiments of the present application, the carbon layer of the cathode material exhibits a porous network structure that uniformly coats the sodium vanadium fluorophosphate particles, and this porous network carbon layer has suitable thickness and porosity, which provides a good thermal stability and creates a more efficient electron transport channel that improves the electronic conductivity of the material, and facilitates the electrolyte penetration and the rapid sodium ion transport. As a result, the electrochemical performance of the secondary battery such as the charging efficiency the discharging efficiency is enhanced while improving the thermal stability of the secondary battery and prolonging the service life of the secondary battery.

In some embodiments, the cathode material manufactured by the manufacturing method of the present application has at least one of the following characteristics:
(1) a pore size of 2 nm to 8 nm;
(2) a specific surface area of 10 m²/g to 50 m²/g; and
(3) a powder resistivity of less than or equal to 80,000 Ω·cm.

In those embodiments, the pore size of the cathode material (i.e., the pore size of the porous network structure of the carbon layer of the cathode material) and the specific surface area of the cathode material are suitable to improve the conductivity and ensure the electrolyte infiltration of the cathode material without compromising the compaction density and the structural stability of the cathode material. In addition, the powder resistivity of the cathode material falls within a suitable range, which makes the electron transfer rate of the cathode material within a suitable range, thereby achieving a good electronic conductivity of the cathode material and resulting in a high rate performance and improved stability and safety of the second battery.

In a third aspect, a cathode plate is provided according to embodiments of the present application, including the cathode material described above or the cathode material manufactured by any of the manufacturing methods described above.

In those embodiments, the cathode plate has the advantages of high electronic conductivity, high sodium ion transport efficiency, and high stability due to the inclusion of the cathode material described above.

In a fourth aspect, a secondary battery is provided according to embodiments of the present application, including the cathode plate described above.

In those embodiments, the secondary battery has the advantages of high charging efficiency, high discharging efficiency, high energy density, and long cycling life due to the inclusion of the cathode plate described above.

Some specific examples are listed below. It should be noted that the examples described below are exemplary and are only used to illustrate the present application, and should not be construed as limiting the present application. Where specific techniques or conditions are not indicated in the examples, follow the techniques or conditions described in the literatures in the field or in accordance with the product specification. Unless otherwise noted with the manufacturer, the reagents or instruments used are conventional products that can be purchased commercially.

### I. Manufacturing Method

### 1. Manufacturing of Cathode Material

### Example 1

As an example of the cathode material of the present application, a cathode material S1 in this example was manufactured by the following method.
(1) 10g of dry starch and 100mL of 0.2mol/L NaOH aqueous solution were stirred at 60°C (a first mixing temperature) for 1h (a first mixing time) to obtain a first dispersion liquid;
(2) 2,3-epoxypropyl trimethyl ammonium chloride (a cationic modifier) was added dropwise to the first dispersion liquid, mixed, and then subjected to a reaction at 60°C (a first reaction temperature) for 6 h (a first reaction time) to obtain a first reaction liquid. An amount-of-substance ratio of 2,3-epoxypropyl trimethyl ammonium chloride to a glucose unit in the first dispersion liquid was 2:1.
   After cooling to room temperature, the first reaction liquid was diluted to twice its original volume by adding water, and added with 0.2mol/L hydrochloric acid aqueous solution (a pH adjuster) in batches for neutralization until the pH value of the first reaction liquid reached 6.5, to obtain a pretreatment liquid. The pretreatment liquid was stirred at 70°C for 8h, during which the pH value was controlled between 6 to 7, to complete the neutralization. The neutralized first reaction liquid was placed into a dialyzing bag with a pore size of 3.5kDa and dialyzed and purified with water for 12h to obtain a binder.
(3) The binder was prepared into an aqueous solution with a mass fraction of 1% and mixed with phytic acid, NaOH, ammonium fluoride, NH₄VO₃, and citric acid at 25°C under stirring for 0.5h to obtain a precursor solution. An amount-of-substance ratio of phytic acid, NaOH, ammonium fluoride, and NH₄VO₃ was 2:3:3:2, and a mass ratio of the binder, NH₄VO₃, and citric acid was 1:1:4.
(4) The precursor solution was subjected to a reaction at a microwave power of 300W and a heating temperature of 120°C for 1h to obtain a gel slurry.
(5) The gel slurry was dried at 100°C for 6h to obtain a dried gel powder. The dried gel powder was heated to 400°C at a rate of 5°C/min under an argon gas at a flow rate of 100 mL/min and held at that temperature for 0.5h to obtain a first calcined material. The first calcined material was continuously heated to 800°C at a rate of 5°C/min and held at that temperature for 1h to obtain a second calcined material. The second calcined material was cooled to 60°C, ground to 200 mesh, and then sieved to obtain the cathode material S1.

### Example 2

As an example of the cathode material of the present application, a cathode material S2 in this example was manufactured by the following method.
(1) 10g of dry starch and 100mL of 0.1 mol/L NaOH aqueous solution were stirred at 80°C (a first mixing temperature) for 3h (a first mixing time) to obtain a first dispersion liquid;
(2) 3-chloro-2-hydroxypropyl trimethylammonium chloride (a cationic modifier) was added dropwise to the first dispersion liquid, mixed, and then subjected to a reaction at 60°C (a first reaction temperature) for 10 h (a first reaction time) to obtain a first reaction liquid. An amount-of-substance ratio of 3-chloro-2-hydroxypropyl trimethylammonium chloride to a glucose unit in the first dispersion liquid was 1:1.
   After cooling to room temperature, the first reaction liquid was diluted to twice its original volume by adding water, and added with 0.1 mol/L hydrochloric acid aqueous solution (a pH adjuster) in batches for neutralization until the pH value of the first reaction liquid reached 6.0, to obtain a pretreatment liquid. The pretreatment liquid was stirred at 50°C for 10h, during which the pH value was controlled between 6 to 7, to complete the neutralization. The neutralized first reaction liquid was placed into a dialyzing bag with a pore size of 3.5kDa and dialyzed and purified with water for 14h to obtain a binder.
(3) The binder was prepared into an aqueous solution with a mass fraction of 2% and mixed with phytic acid, NaOH, ammonium fluoride, NH₄VO₃, and citric acid at 25°C under stirring for 3h to obtain a precursor solution. An amount-of-substance ratio of phytic acid, NaOH, ammonium fluoride, and NH₄VO₃ was 2:3:3:2, and a mass ratio of the binder, NH₄VO₃, and citric acid was 1:1:1.
(4) The precursor solution was subjected to a reaction at a microwave power of 200W and a heating temperature of 160°C for 2h to obtain a gel slurry.
(5) The gel slurry was dried at 100°C for 12h to obtain a dried gel powder. The dried gel powder was heated to 350°C at a rate of 5°C/min under an argon gas at a flow rate of 120 mL/min and held at that temperature for 2h to obtain a first calcined material. The first calcined material was continuously heated to 800°C at a rate of 5°C/min and held at that temperature for 1h to obtain a second calcined material. The second calcined material was cooled to 50°C, ground to 200 mesh, and then sieved to obtain the cathode material S2.

### Example 3

As an example of the cathode material of the present application, a cathode material S3 in this example was manufactured by the following method.
(1) 10g of dry starch and 100mL of 0.5 mol/L NaOH aqueous solution were stirred at 40°C (a first mixing temperature) for 0.5h (a first mixing time) to obtain a first dispersion liquid;
(2) 2-diethylaminoethylammonium chloride (a cationic modifier) was added dropwise to the first dispersion liquid, mixed, and then subjected to a reaction at 30°C (a first reaction temperature) for 10 h (a first reaction time) to obtain a first reaction liquid. An amount-of-substance ratio of 2-diethylaminoethylammonium chloride to a glucose unit in the first dispersion liquid was 4:1.
   After cooling to room temperature, the first reaction liquid was diluted to twice its original volume by adding water, and added with 0.3 mol/L hydrochloric acid aqueous solution (a pH adjuster) in batches for neutralization until the pH value of the first reaction liquid reached 7.0, to obtain a pretreatment liquid. The pretreatment liquid was stirred at 90°C for 6h, during which the pH value was controlled between 6 to 7, to complete the neutralization. The neutralized first reaction liquid was placed into a dialyzing bag with a pore size of 3.5kDa and dialyzed and purified with water for 12h to obtain a binder.
(3) The binder was prepared into an aqueous solution with a mass fraction of 4% and mixed with phytic acid, NaOH, ammonium fluoride, NH₄VO₃, and citric acid at 25°C under stirring for 3h to obtain a precursor solution. An amount-of-substance ratio of phytic acid, NaOH, ammonium fluoride, and NH₄VO₃ was 2:3:3:2, and a mass ratio of the binder, NH₄VO₃, and citric acid was 1:1:5.
(4) The precursor solution was subjected to a reaction at a microwave power of 500W and a heating temperature of 120°C for 0.5h to obtain a gel slurry.
(5) The gel slurry was dried at 120°C for 6h to obtain a dried gel powder. The dried gel powder was heated to 550°C at a rate of 5°C/min under an argon gas at a flow rate of 50 mL/min and held at that temperature for 0.5h to obtain a first calcined material. The first calcined material was continuously heated to 700°C at a rate of 5°C/min and held at that temperature for 3h to obtain a second calcined material. The second calcined material was cooled to 40°C, ground to 200 mesh, and then sieved to obtain the cathode material S3.

### Example 4

As an example of the cathode material of the present application, a cathode material S4 in the present application was manufactured by a method the same or similar as that in Example 1, except that in step (2), the amount-of-substance ratio of 2,3-epoxypropyl trimethyl ammonium chloride added dropwise to the first dispersion liquid to the glucose unit was 0.8mol:1mol.

### Example 5

As an example of the cathode material of the present application, a cathode material S5 in the present application was manufactured by a method the same or similar as that in Example 1, except that in step (2), the amount-of-substance ratio of 2,3-epoxypropyl trimethyl ammonium chloride added dropwise to the first dispersion liquid to the glucose unit was 5mol:1mol.

### Example 6

As an example of the cathode material of the present application, a cathode material S6 in the present application was manufactured by a method the same or similar as that in Example 1, except that in step (3), the mass ratio of the starch binder, NH₄VO₃, and citric acid was 1:1:5.

### Example 7

As an example of the cathode material of the present application, a cathode material S11 in the present application was manufactured by a method the same or similar as that in Example 1, except that in step (3), the mass ratio of the starch binder, NH₄VO₃, and citric acid was 1:1:6.

### Example 8

As an example of the cathode material of the present application, a cathode material S12 in the present application was manufactured by a method the same or similar as that in Example 1, except that in step (4), the microwave power was 100W.

### Example 9

As an example of the cathode material of the present application, a cathode material S13 in the present application was manufactured by a method the same or similar as that in Example 1, except that in step (4), the microwave power was 600W.

### Example 10

As an example of the cathode material of the present application, a cathode material S14 in the present application was manufactured by a method the same or similar as that in Example 1, except that in step (4), the reaction time was 0.2h.

### Example 11

As an example of the cathode material of the present application, a cathode material S15 in the present application was manufactured by a method the same or similar as that in Example 1, except that in step (4), the reaction time was 3h.

### Example 12

As an example of the cathode material of the present application, a cathode material S16 in the present application was manufactured by a method the same or similar as that in Example 1, except that in step (5), after the dried gel powder was obtained, the dried gel powder was heated to 700°C at a rate of 5°C/min under an argon gas at a flow rate of 100mL/min and directly held at that temperature for 3.5h without the further calcination.

### Example 13

As an example of the cathode material of the present application, a cathode material S17 in the present application was manufactured by a method the same or similar as that in Example 1, except that in step (5), after the dried gel powder was obtained, the dried gel powder was heated to 550°C at a rate of 5°C/min under an argon gas at a flow rate of 50 mL/min and directly held at that temperature for 3.5h without the further calcination.

### Example 14

As an example of the cathode material of the present application, a cathode material S17 in the present application was manufactured by a method the same or similar as that in Example 1, except that in step (5), after the dried gel powder was obtained, the dried gel powder was heated to 550°C at a rate of 5°C/min under an argon gas at a flow rate of 50 mL/min and held at that temperature for 3h to obtain the first calcined material.

### Example 15

As an example of the cathode material of the present application, a cathode material S17 in the present application was manufactured by a method the same or similar as that in Example 1, except that in step (5), after the first calcined material was obtained, the first calcined material was continuously heated to 700°C at a rate of 5°C/min and held at that temperature for 0.5h to obtain the first calcined material.

### Comparative Example 1

As a comparative example of the cathode material of the present application, a cathode material D1 in this comparative example was manufactured by a method distinguished from that in Example 1 in that in step (4), the precursor solution was subjected to a hydrothermal treatment at a temperature of 150°C and a pressure of 8MPa for a time of 12h to obtain the slurry.

### Comparative Example 2

As a comparative example of the cathode material of the present application, a cathode material D2 in this comparative example was manufactured by a method distinguished from that in Example 1 in that in step (4), the precursor solution was subjected to a sol-gel treatment, including the following step: the precursor solution was subjected to a reaction at a heating temperature of 100°C for 24h to obtain the slurry.

### 2. Manufacturing of Secondary Battery

The cathode materials manufactured in various Examples and Comparative Examples are manufactured into respective cathode plates. A general method for preparing the above cathode plates was as follows: the cathode material, conductive carbon black, and carboxymethyl cellulose were mixed at a mass ratio of 8:1:1, and added with deionized water to produce a slurry; the slurry was uniformly coated on an aluminum foil with a scraper; and the coated plate was dried at 60°C for 1h and then rolled and cut to obtain a circular cathode plate with a diameter of 12 mm. An amount of an active material loaded on the cathode plate was 2.8 mg/cm².

After dried, various cathode plates were assembled into CR2035 button cells in a glove box, and the cells were placed into a constant temperature drying oven and dried for 12 h for a later use. The general method for preparing the above cell was as follows: an anode case, a sodium sheet, an electrolyte, a porous polyolefin membrane, NaClO₄ electrolyte, the cathode plate, a gasket, a resilient sheet, and a cathode case were assembled in order.

### II. Testing Methods

### 1. Testing of Properties of Cathode Material

(1) The porosity is determined in accordance with POROSITY DETERMINATION METHOD OF LIGHTWEIGHT POROUS MATERIALS, TCSTM 00553-2022.
(2) The thickness of the carbon layer and the pore size of the porous network structure of the carbon layer are tested by TEM.
(3) The specific surface area is measured by BET tester with the nitrogen adsorption method.
(4) The powder resistivity is measured by the four-probe method at a pressure of 10 MPa.
(5) The element distribution is tested by using an energy dispersive X-ray (EDS) detector to analyze the profile distribution and detect the distribution of various elements, with an accelerating voltage (HV) of 15kV, a peak width (FW) of 29.3µm, a working distance (WD) of 8.870 mm, and a pressure of 0.10 Pa.

### 2. Testing of Properties of Secondary Battery

(1) Charge Specific Capacity: The amount of charge that the electrode material can store per unit mass or volume during the charging process.
(2) Discharge Specific Capacity: The amount of charge that the electrode material can release per unit mass or volume during the discharging process.
(3) Capacity Retention after 1000 cycles at 1C: The ratio of the remaining capacity to the initial capacity of a cell after 1000 charge-discharge cycles at a rate of 1C.
(4) Rate Performance Test: The charge-discharge process is cycled at rates of 0.2C, 1C, and 10C, with one cycle performed at each rate.

All of the above tests are performed using the Wuhan Blue Electric CT2001A battery testing system, with a voltage range of 2.0 V to 4.0 V.

### III. Analysis of Test Results of Various Examples and Comparative Examples

FIGs. 2a to 2f show the distributions of various elements in the cathode material in Example 1 of the present application. It can be seen from FIGs. 2a to 2f that C, F, O, P, Na, and V elements are distributed uniformly in the cathode material, suggesting that the sodium vanadium fluorophosphate is distributed uniformly in the carbon layer in the cathode material of the present application, and the sodium vanadium fluorophosphate has a high purity without other impurities.

Referring to FIG. 3 in which (a), (b) and (c) show scanning electron microscope images of the cathode materials in Example 1, Example, 2 and Example 3, respectively. It can be seen intuitively from FIG. 3 that the cathode materials of the present application all exhibit an obvious three-dimensional porous structure with a relatively uniform pore size distribution, and that there is a good connectivity between pores so that a continuous and interconnected network structure is formed.

Referring to FIG. 4, FIG. 4 is a scanning electron microscope image of Comparative Example 1. It can be seen from FIG. 4 that the cathode material obtained by the hydrothermal treatment in Comparative Example 1 exhibits an obvious sphere-like morphology, with the spherical particles stacked together, and with a diameter of about 100µm to 200µm. The surface of the sphere-like particles is relatively smooth, with some tiny protrusions or depressions.

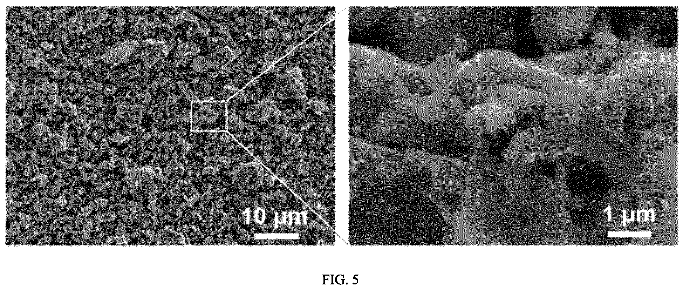

Referring to FIG. 5, FIG. 5 is a scanning electron microscope image of Comparative Example 2. The right image in FIG. 5 is an enlarged view of a portion of the left image. It can be seen from FIG. 5 that the cathode material obtained by the gel-sol method in Comparative Example 2 exhibits an obvious stacking of particles, with a small pore size and a random distribution of carbon particles.

### 3. Performance characterization of cathode material

**Table 1 Porosity of cathode materials corresponding to Examples 1 to 15 and Comparative Examples 1 to 2**

| Corresponding examples and comparative examples | Tested Materials | Porosity | Carbon layer thickness (nm) | Pore size of the porous network structure of carbon layer (nm) | Specific surface area (m²/g) | Powder resistivity (Ω·cm) |
|---|---|---|---|---|---|---|
| Example 1 | cathode material S1 | 20% | 5 | 2 | 13 | 34,500 |
| Example 2 | cathode material S2 | 18% | 4 | 3 | 22 | 37,800 |
| Example 3 | cathode material S3 | 16% | 6 | 5 | 27 | 33,400 |
| Example 4 | cathode material S4 | 15% | 5 | 4 | 21 | 35,200 |
| Example 5 | cathode material S5 | 21% | 4 | 6 | 25 | 47,900 |
| Example 6 | cathode material S6 | 20% | 6 | 6 | 26 | 46,300 |
| Example 7 | cathode material S7 | 33% | 3 | 8 | 43 | 68,900 |
| Example 8 | cathode material S8 | 13% | 5 | 2 | 14 | 68,700 |
| Example 9 | cathode material S9 | 30% | 4 | 7 | 44 | 77,800 |
| Example 10 | cathode material S10 | 28% | 6 | 2 | 45 | 77,200 |
| Example 11 | cathode material S11 | 27% | 4 | 3 | 42 | 79,000 |
| Example 12 | cathode material S12 | 13% | 4 | 7 | 32 | 73,200 |
| Example 13 | cathode material S13 | 11% | 5 | 8 | 24 | 67,500 |
| Example 14 | cathode material S14 | 13% | 3 | 4 | 13 | 78,600 |
| Example 15 | cathode material S15 | 12% | 6 | 7 | 17 | 79,000 |
| Comparative Example 1 | cathode material D1 | 9% | 7 | 10 | 71 | 91,000 |
| Comparative Example 2 | cathode material D2 | 6% | 2 | 1 | 8 | 112,000 |

**Table 2 Charge and discharge performance of the secondary battery corresponding to Examples 1 to 15 and Comparative Examples 1 to 2.**

| | Initial charge capacity at 0.2C (mAh/ g) | Initial discharge capacity at 0.2C (mAh/ g) | Efficiency (%) | Initial charge capacity at 10C (mAh/ g) | Initial discharge capacity at 10C (mAh/ g) | Efficiency(%) | Initial charge capacity at 1C (mAh/g) | Initial discharge capacity 1C (mAh/g) | Efficiency(%) |
|---|---|---|---|---|---|---|---|---|---|
| Example 1 | 130.1 | 125.5 | 96.46 | 105.35 | 102.89 | 97.66 | 124.9 | 120.48 | 96.46 |
| Example 2 | 129.48 | 124.67 | 96.29 | 104.88 | 102.36 | 97.60 | 124.69 | 119.93 | 96.19 |
| Example 3 | 128.99 | 124.23 | 96.31 | 104.48 | 101.89 | 97.52 | 123.7 | 119.01 | 96.21 |
| Example 4 | 128.72 | 123.96 | 96.30 | 104.35 | 101.67 | 97.43 | 123.53 | 119.58 | 96.80 |
| Example 5 | 128.13 | 123.26 | 96.20 | 104.71 | 101.62 | 97.05 | 122.86 | 119.45 | 97.22 |
| Example 6 | 128.89 | 124.16 | 96.33 | 104.99 | 102.37 | 97.50 | 123.89 | 119.81 | 96.71 |
| Example 7 | 118.98 | 112.38 | 94.45 | 99.89 | 93.06 | 93.16 | 112.29 | 104.78 | 93.31 |
| Example 8 | 117.45 | 108.41 | 92.30 | 98.47 | 93.15 | 94.60 | 112.37 | 103.73 | 92.31 |
| Example 9 | 119.67 | 109.85 | 91.79 | 98.15 | 90.15 | 91.85 | 111.56 | 100.63 | 90.20 |
| Example 10 | 114.21 | 107.63 | 94.24 | 97.37 | 90.88 | 93.33 | 110.56 | 100.31 | 90.73 |
| Example 11 | 113.45 | 104.08 | 91.74 | 97.09 | 89.81 | 92.50 | 110.11 | 99.38 | 90.26 |
| Example 12 | 112.79 | 102.5 | 90.88 | 96.67 | 90.39 | 93.50 | 110.56 | 98.73 | 89.30 |
| Example 13 | 112.01 | 103.84 | 92.71 | 95.78 | 89.4 | 93.34 | 109.9 | 98.64 | 89.75 |
| Example 14 | 115.79 | 107.29 | 92.66 | 93.05 | 88.57 | 95.19 | 113.89 | 102.57 | 90.06 |
| Example 15 | 114.04 | 108.21 | 94.89 | 92.94 | 88.41 | 95.13 | 114.6 | 102.81 | 89.71 |
| Comparative Example 1 | 110.45 | 100.6 | 91.08 | 77.34 | 73.95 | 95.62 | 100.51 | 93.24 | 92.77 |
| Comparative Example 2 | 108.57 | 99.23 | 91.40 | 74.56 | 71.81 | 96.31 | 96.63 | 92.01 | 95.22 |

According to Table 2, the secondary batteries with the cathode materials of the present application have good initial discharge capacities at low rates, such as 0.2C, with the initial discharge capacities between 112 mAh/g to 131 mAh/g. As the rate increases, the initial discharge capacities of the secondary batteries decrease slightly but does not change too much, that is, the secondary batteries still have good initial discharge capacities. When the rate increases to 10C, the initial discharge capacities can still reach 88mAh/g to 103mAh/g. In contrast, the initial discharge capacities of the secondary batteries with the cathode materials in Comparative Example 1 and Comparative Example 2 show significant decrease at medium and high rates, such as 1C and 10C. This suggests the significantly improved rate performance of the secondary battery with the cathode material of the present application.

According to Table 2, while the secondary batteries with the cathode materials in Comparative Example 1 and Comparative Example 2 have good initial discharge capacities at low rates such as 0.2 C, their initial discharge capacities decline significantly at medium and high rates such as 1 C and 10 C, gradually decreasing from 103.6mAh/g to 93.24mAh/g to 77.34mAh/g, and decreasing from 102.23mAh/g to 92.01mAh/g to 71.81mAh/g, respectively, suggesting poor rate performances of the secondary batteries.

**Table 3 Cycling performance of the secondary battery corresponding to Examples 1 to 15 and Comparative Examples 1 to 2.**

| | Initial charge capacity at 1C (mAh/g) | Specific charge capacity after 100 cycles at 1C (mAh/g) | Capacity retention rate (%) | Specific discharge capacity after 101 cycles at 1C (mAh/g) | Efficiency(%) |
|---|---|---|---|---|---|
| Example 1 | 124.9 | 116.15 | 92.99 | 111.68 | 96.15 |
| Example 2 | 124.69 | 116.34 | 93.30 | 112.38 | 96.60 |
| Example 3 | 123.7 | 112.94 | 91.30 | 109.13 | 96.63 |
| Example 4 | 116.53 | 98.83 | 84.81 | 93.2 | 94.31 |
| Example 5 | 114.56 | 99.87 | 87.18 | 93.7 | 93.82 |
| Example 6 | 123.89 | 115.79 | 93.46 | 112.43 | 97.10 |
| Example 7 | 112.29 | 97.99 | 87.27 | 92.15 | 94.04 |
| Example 8 | 94.37 | 70.89 | 75.12 | 61.64 | 86.95 |
| Example 9 | 109.56 | 73.39 | 66.99 | 57.75 | 78.69 |
| Example 10 | 97.56 | 81.45 | 83.49 | 63.17 | 77.56 |
| Example 11 | 92.11 | 87.23 | 94.70 | 70.64 | 80.98 |
| Example 12 | 84.56 | 79.05 | 93.48 | 57.9 | 73.25 |
| Example 13 | 83.9 | 71.04 | 84.67 | 50.36 | 70.89 |
| Example 14 | 113.89 | 101.99 | 89.55 | 91.72 | 89.93 |
| Example 15 | 96.6 | 80.07 | 82.89 | 66.67 | 83.27 |
| Comparative Example 1 | 100.51 | 85.73 | 85.29 | 77.11 | 89.94 |
| Comparative Example 2 | 96.63 | 82.13 | 84.99 | 77.29 | 94.10 |

According to Table 3, the secondary batteries with the cathode materials of the present application have high capacity retention rates after cycling 100 times at a rate of 1C. In some examples, the capacity retention rates after cycling 100 times at a rate of 1C can reach 90% above, suggesting that the secondary battery with the cathode material of the present application has a longer cycling life. In addition, the secondary batteries with the cathode materials of the present application have higher battery efficiency after cycling 100 times at a rate of 1C. In some examples, the capacity efficiency after cycling 100 times at a rate of 1C can reach more than 90%, suggesting that the secondary battery with the cathode material of the present application has a high practical efficiency.

In summary, in the cathode material provided in the present application, the sodium vanadium fluorophosphate particles are uniformly coated by the porous network structure of the carbon layer of the cathode material, and the porous network carbon layer has suitable thickness and porosity, thereby providing a good thermal stability and creating a more efficient electron transport channel that improves the electronic conductivity of the material, and facilitating the electrolyte penetration and the rapid sodium ion transport. As a result, the actual capacity of the secondary battery having the cathode material is effectively improved, and the secondary battery exhibits stable cycling performance and a high cycling life and rate performance.

It should be noted that the present application is not limited to the foregoing embodiments. The foregoing embodiments are merely examples, and embodiments having substantially the same configurations and effects as those of the technical conceptions within the scope of the present application are all included in the technical scope of the present application. In addition, various modifications that can be conceived by those skilled in the art may be made to the embodiments without departing from the spirit and scope of the present application, and other embodiments that are constructed by combining some of the components in the embodiments are also included in the scope of the present application.

## Claims

1. A cathode material, comprising a carbon layer and sodium vanadium fluorophosphate particles distributed in the carbon layer, with the sodium vanadium fluorophosphate particles coated by the carbon layer;
wherein the carbon layer has a porous network structure and a thickness of 3 nm to 6 nm; and
wherein the cathode material has a porosity of 10% to 35%.

2. The cathode material according to claim 1, wherein the cathode material comprises at least one of the following characteristics:
(1) a pore size of the carbon layer of 2 nm to 8 nm;
(2) a specific surface area of 10 m²/g to 50 m²/g; and
(3) a powder resistivity of less than or equal to 80,000 Ω·cm.

3. A manufacturing method for a cathode material, comprising the following steps:
mixing a reducing carbohydrate with an alkaline solution to obtain a first dispersion liquid;
mixing the first dispersion liquid with a cationic modifier and obtaining a binder through a first reaction treatment;
mixing the binder, a phosphorus source, a sodium source, a fluorine source, a vanadium source, and a complexing agent to obtain a precursor solution;
subjecting the precursor solution to a microwave reaction to obtain a gel slurry; and
subjecting the gel slurry to a drying treatment followed by a calcining treatment to obtain the cathode material.

4. The manufacturing method for the cathode material according to claim 3, wherein the step of mixing the reducing carbohydrate with the alkaline solution to obtain the first dispersion liquid comprises:
mixing the reducing carbohydrate with the alkaline solution at a first mixing temperature for a first mixing time to obtain the first dispersion liquid;
wherein the first mixing temperature is 40°C to 80°C, and the first mixing time is 0.5h to 3h; and/or,
wherein a concentration of hydroxide ions in the alkaline solution is 0.1 mol/L to 0.5 mol/L.

5. The manufacturing method for the cathode material according to claim 3, wherein the step of mixing the first dispersion liquid with the cationic modifier and obtaining the binder through the first reaction treatment comprises:
subjecting the first dispersion liquid mixed with the cationic modifier to a first reaction temperature for a first reaction time to obtain a first reaction liquid; and
subjecting the first reaction liquid to a neutralizing treatment followed by a purifying treatment to obtain the binder;
wherein the first reaction temperature is 30°C to 60°C, and the first reaction time is 6h to 10h; and/or,
wherein an amount-of-substance ratio of the cationic modifier to a glucose unit in the first dispersion liquid is (1 to 4):1.

6. The manufacturing method for the cathode material according to claim 5, wherein the step of subjecting the first reaction liquid to the neutralizing treatment comprises:
adding a pH adjuster to the first reaction liquid until achieving a pH value of 6 to 7 to obtain a pretreatment liquid; and
stirring the pretreatment liquid at a pH value of 6 to 7 and a temperature of 50°C to 90°C for 6h to 10h; and/or,
the step of subjecting the first reaction liquid to the purifying treatment after the neutralizing treatment comprises:
subjecting the neutralized first reaction liquid to a dialyzing treatment.

7. The manufacturing method for the cathode material according to claim 3, wherein the step of subjecting the precursor solution to the microwave reaction to obtain the gel slurry comprises:
subjecting the precursor solution to a first microwave power and a second reaction temperature for a second reaction time to obtain the gel slurry;
wherein the first microwave power is 200W to 500W, the second reaction temperature is 120°C to 160°C, and the second reaction time is 0.5h to 2h.

8. The manufacturing method for the cathode material according to claim 3, wherein the step of subjecting the gel slurry to the drying treatment followed by the calcining treatment to obtain the cathode material comprises:
subjecting the gel slurry to a first drying temperature for a first drying time to obtain a dried gel powder; and
subjecting the dried gel powder to the calcining treatment to obtain the cathode material;
wherein the first drying temperature is 100°C to 120°C, and the first drying time is 6h to 12h; and/or,
the step of subjecting the dried gel powder to the calcining treatment to obtain the cathode material comprises:
in a first protective gas, subjecting the dried gel powder to a first calcining temperature for a first temperature-holding time to obtained a first calcined material;
in a second protective gas, subjecting the first calcined material to a second calcining temperature for a second temperature-holding time to obtain a second calcined material; and
subjecting the second calcined material to a grinding treatment and a sievingtreatment to obtain the cathode material;
wherein the first protective gas or the second protective gas is a protective gas, the first calcining temperature is 350°C to 550°C, the first temperature-holding temperature time is 0.5h to 2h, the second calcining temperature is 700°C to 800°C, and the second temperature-holding temperature time is 1h to 3h; and
wherein the protective gas comprises argon, nitrogen, or a combination thereof.

9. The manufacturing method of the cathode material according to any one of claims 3 to 8, wherein the manufacturing method satisfies at least one of the following conditions:
(1) an amount-of-substance ratio of phosphorus in the phosphorus source, sodium in the sodium source, fluorine in the fluorine source, and vanadium in the vanadium source is 2:3:3:2;
(2) a mass ratio of the binder, the vanadium source, and the complexing agent is 1:1:(1 to 5);
(3) the cationic modifier comprises 2,3-epoxypropyl trimethyl ammonium chloride, 3-chloro-2-hydroxypropyl trimethyl ammonium chloride, 2-diethylaminoethylammonium chloride, or any combinations thereof;
(4) the phosphorus source comprises phytic acid;
(5) the sodium source comprises sodium hydroxide, sodium fluoride, sodium carbonate, sodium bicarbonate, or any combinations thereof;
(6) the fluorine source comprises ammonium fluoride, polytetrafluoroethylene, sodium fluoride, or any combinations thereof;
(7) the vanadium source comprises ammonium vanadate, ammonium metavanadate, or a combination thereof; and
(8) the complexing agent comprises citric acid, oxalic acid, tannic acid, or any combinations thereof.

10. A cathode plate, comprising the cathode material according to claim 1 or 2 or the cathode material manufactured by the manufacturing method according to any one of claims 3 to 9.

11. A secondary battery, comprising the cathode plate according to claim 11.
